# NEW EUROPEAN PATENT SPECIFICATION

(11) **EP 0 250 501 B2**
(45) Date of publication and mention of the opposition decision: **01.06.1994**
(45) Mention of the grant of the patent: 06.02.1991
(21) Application number: 87900072.7
(22) Date of filing: 03.11.1986
(51) Int. Cl.: A23J 1/20, A23J 3/00

(54) **A PROCESS FOR THE PREPARATION OF A HEAT RESISTANT NON-BITTER WATER-SOLUBLE PEPTIDE PRODUCT, THE PRODUCT PRODUCED BY THE PROCESS, AND NUTRIENTS, REFRESHMENTS AND DIETETICS COMPRISING THE PRODUCT**
VERFAHREN ZUR HERSTELLUNG EINES HITZEBESTÄNDIGEN, NICHT-BITTEREN, WASSERLÖSLICHEN PEPTIDPRODUKTES, DAS PRODUKT, DURCH DAS VERFAHREN HERGESTELLT UND DAS PRODUKT ENTHALTENDE NÄHRSTOFFE, ERFRISCHUNGEN UND DIÄTPRODUKTE
PROCEDE POUR PREPARER UN PRODUIT A BASE DE PEPTIDES NON AMERE, HYDROSOLUBLE ET RESISTANT A LA CHALEUR, PRODUIT OBTENU PAR CE PROCEDE, ET ALIMENTS, BOISSONS ET PRODUITS DIETETIQUES CONTENANT LEDIT PRODUIT

(30) Priority: 18.12.1985 DK 5897/85
(43) Date of publication of application: 07.01.1988
(73) Proprietor: Poulsen, Otto Melchior, DK-2610 Rodovre (DK); Samuelsson, Ernst-Gunnar, DK-3140 Aalsgaarde (DK)
(72) Inventor: Poulsen, Otto Melchior, DK-2610 Rodovre (DK); Samuelsson, Ernst-Gunnar, DK-3140 Aalsgaarde (DK)
(74) Representative: Wetke, Ellen
(86) International application number: PCT/DK86/00123
(87) International publication number: WO 87/03785

(56) References cited:
- EP-A- 0 022 019
- EP-A-00 336 94
- EP-A-00 656 63
- EP-B- 22 019
- EP-B- 173 999
- NL-A- 7 311 095
- US-A- 4 107 334
- US-A-42 935 71
- Le Lait (1982) 62, p. 484-510
- Food Proteins, Fox and Condon (ed.), Applied Science Publishers, Londen 1982
- Neth.Milk Dairy J. 35 (1981) 233-253
- J. Dairy Sci. 67 (1984) p. 1599-1631
- Agr.Biol.Chem. 36(8) (1972) p. 1423-1431
- J.Dairy Sci. 60 (1977) p. 1387-1393
- J.Dairy Sci. 61 (1978) p. 1233-1237
- J.Pediatr. Gastroenterol. Nutr. 4 (1985) p. 408-413
- Process Biochem. (July 1973) p.24-25

## Description

This invention relates to a method of preparing a heat resistant, non-bitter easily water-soluble peptide product from whey protein materials.

The peptide products prepared by the method according to the invention are capable of being used as protein supplements and protein substitutes in nutrients and refreshments and as a constituent of dietetics.

During recent years there has been an increasing interest in preparing peptide products for such purposes and these products must have a neutral taste, be non-bitter, easily soluble in water and heat resistant. Whey proteins possess a very desirable content of essential amino acids and are inexpensive and easily available in large quantities, and methods of preparing peptide products for the above mentioned purposes from whey proteins therefore present a particularly commerical interest.

Various such methods have been proposed.

US patent No. 4,107,334 discloses a method of preparing a soluble peptide product according to which whey protein is subjected to heat treatment until 50% of the protein has precipitated. The precipitated whey protein, called lactalbumin, is subjected to mild proteolytic, enzymatic hydrolysis resulting in a hydrolyzate, in which the major part of the proteins is cleft into soluble peptides. The hydrolyzate is then treated by heat for deactivating the used proteinase. The use of said heat treatment both with respect to preparing lactalbumin and with respect to deactivating the proteinase entails, however, the loss of important sulphurous amino acids, the generation of undesired flavours and in the presence of lactose the formation of Mai Ilard-reaction products that are frequently allergenic (see e.g. Otani, H. and Tokitz, F. 1982, Japan J. Zootechn. Sci. Vol. 53, page 344, and Matsuda, T et al 1985, J. Food Sci. Vol. 50. page 618).

US patent No. 4,293,571 likewise discloses a method of preparing a peptide product from for instance whey protein by an enzymatic hydrolysis followed by a heat treatment. The peptide product obtained after ultrafiltration suffers from the same drawbacks as mentioned in connection with the above mentioned heat-treated product.

European patent applications Nos. 0065663 and 0022019 relate to methods of preparing peptide products consisting substantially of small peptides including up to 5 amino acid residues and which are intended to be used in special diets for patients with reduced or lacking ability to digest and/or absorb proteins containing food, by enzymatic hydrolysis of whey protein. Thus, European patent application No. 0065663 relates to a peptide product containing at least 50% by weight of a combination of amino acids, di-peptides and tri-peptides and not more than 25% by weight of polypeptides containing 10or more amino acids, while patent No. 0022019 relates to a peptide product in which an amount of at least 50% of the peptides contains from 2 to 5 amino acid residues and the portion of free amino acids is less than 15%.

When subjected to hydrolysis, most proteins have a tendency to produce peptides with a bitter taste and the bitterness is strongest as far as short-chained peptides are concerned containing less than 10 amino acids, in particular 4 to 8 amino acids. Peptide products having a high content of peptides with less than 10 amino acids may therefore have a very bitter flavour. In view of the fact that hydrophobic amino acids are bitterwhile various of the polar amino acids have a saline taste, a large content of free amino acids will likewise give rise to problems as to flavour. Moreover, a large content of free amino acids results in a product having a high osmolarity which impedes the absorption of liquid from such a product.

In view of the above the products disclosed in European patent applications Nos. 0065663 and 0022019 have a very limited field of application, viz. for preparations of special diets for patients suffering from gastric and intestinal malfunction.

Various methods of eliminating the bitter flavour have been suggested. Bitter peptides are generally hydrophobic and this may be utilized for selectively removing the bitter peptides by extraction with organic solvents or by absorption to activated carbon, glass fibres or other hydrophobic material.

US patent No. 4,075,195 discloses a method involving adsorption to a phenol-substituted resin.

However, said methods suffer from the drawbacks that they imply the loss of certain essential, hydrophobic amino acids and that the adsorbents used must be regenerated by large quantities of organic solvents.

GB patent No. 1,338,936 discloses a method according to which the bitter peptides are cleft by using exo- peptidases. However, said cleavage results in the formation of peptide products having a high content of free amino acids which is undesired as mentioned in the above.

As it appears from the above the prior peptide products obtained by enzymatic hydrolysis of whey protein suffer from drawbacks as to flavour and/or composition of amino acids.

It is therefore the object of the invention to provide a method of preparing a heat resistant, non-bitter, easily water-soluble peptide product by enzymatic hydrolysis of whey protein and which does not suffer from the above drawbacks.

It has now surprisingly proved that hydrolysis of a whey protein material from which the casein has been eliminated by one or more proteinases results in the formation of a peptide product without bitter flavour.

Accordingly, said object is fulfilled by a method which according to the invention is characterized by the following steps:
a) eliminating the casein from the whey protein material,
b) hydrolyzing the casein-free whey protein material obtained according to a) with at least one proteinase,
c) ultrafiltrating the hydrolysate obtained by b) through a membrane having a cut-off value not exceeding 20,000 Dalton, then collecting the filtrate, and subsequently, if desired, concentrating and/or drying the f i It rate.

The casein containing whey protein material used as starting material may be any whey material containing whey protein (defined in this application as the proteins available in whey, apartfrom casein), (the liquid phase afterthe precipitation of the caseins, either in connection with cheese-production or industrial casein-production), such as sweet whey or sour whey, whey concentrates and whey proteinic concentrates obtained by ultrafiltration or heat denaturation (lactalbumin) thereof.

The residual casein content of whey typically constitutes about 30% (on a dry basis) of the total protein content of the material.

The casein which in aqueous phase is present as suspended complexes may in an embodiment of the method according to the invention be eliminated from the whey protein by filtering off the casein particles on a membrane having such a pore size that the casein particles are retained while the whey proteins pass through the filter. Preferably, the pore size of the membrane used according to this embodiment is about 0.2 µm.

It has moreover proved thatthe casein can be eliminated from a non-heat-treated whey in a more preferred embodiment of the method according to the invention by adjusting the pH-value thereof substantially to the isoelectrical point of the casein, i.e. 4.5 till 5.0 by the addition of acid and simultaneous addition of CaC1₂, following which the mixture was left for at least one hour at 30° to 50°C, preferably at 40°C. The casein thus precipitated may easily be separated by filtration or centrifugation. Centrifugation, e.g. on a Westfalia separator, is preferred in case of larger portions. As acid is for instance used HCI.

The quantity of CaC1₂ added is preferably in the range between 1 and 25 g/100 I. In this embodiment it is important that the whey proteins have not been exposed to heat treatment entailing denaturation and thereby precipitation of the whey proteins which will precipitate together with the casein.

It has, moreover, surprisingly been found that the neutral metalloproteinase from Bacillus subtilis (Neutrase, Novo Industri A/S, Denmark) has a high activity against caseins but no or only a feeble activity against native as well as heat-denatured whey proteins. It has thus proved that the casein may be eliminated from the whey protein material by hydrolysis of the casein with the neutral metalloproteinase from Bacillus subtilis. The hydrolysis may be effected at pH 4 to 9, preferably at pH 7.5, and at a temperature ranging from 30°C to 60°C, preferably 50°C. The hydrolysis is preferably allowed to complete, i.e. until attaining a degree of hydrolysis of about 4%, relative to the total amount of proteins. The proportion between the amount used of neutrase and whey protein is not critical, since the quantity of enzymes merely determines how quickly the desired degree of hydrolysis is achieved.

The casein cleavage products may be eliminated by ultrafiltration or centrifugation. If the whey proteins have precipitated due to heat treatment, the casein cleavage products may be eliminated by ultrafiltration through a membrane having a pore size allowing them to pass, or as the supernatant by centrifugation. If the whey proteins only have been subjected to mild or to no heat treatment and therefore are substantially present as native proteins, the casein may be eliminated by ultrafiltration on the membrane having a cut-off value not exceeding 20,000.

After the casein has been eliminated from the whey protein this may be concentrated, preferably by filtration on an ultrafiltration membrane having a cut-off value not exceeding 20,000, for instance until achieving a protein content of 5%. This provides for obtaining separation of lactose, preferably until achieving a lactose content not exceeding 0,1% and the possibly available salts that may be desirable in order to obtain peptide products free of lactose and with low osmolarity.

The hydrolysis of the obtained casein-free whey protein materials according to step b) of the method may be carried out with any proteinase. The hydrolysis may for instance be effected with more different proteinases sequentially or simultaneously and optionally in more steps with intermediary ultrafiltration. It is preferred to use the following proteinases:
Corolase PP (Porcine pancreaproteinases-Rhom-Federal Republic of Germany),
Rhozyme P41 (Aspergillus oryzae proteinase-Genencore-U.S.A.),
Pronase (Streptomyces griseus proteinase-Sigma),
Alcalase 2.4 L (Bacillus licheniformis proteinase),
Novo Industri A/S-Denmark), or
trypsin (Novo Industri A/S-Denmark).

The proportion between the quantities of enzymes and whey proteins as used is not critical, since it does not substantially affect the composition or yield of the peptide product but it is only of material importance as regards the time it takes to attain a desired degree of hydrolysis.

The hydrolysis is preferably effected at a pH-value of about 7.5 and at a temperature of about 50°C. The hydrolysis is continued, preferably until attaining a degree of hydrolysis ranging between 8 and 18%, dependent on the desired size distribution of the peptides of the obtained peptide product and on the desired yield. The degree of hydrolysis may for instance be measured according to the pH-stat-method (see Adler-Nissen, J.J. Chem. Tech. Biotechnol. Vol. 32, page 138 to 156).

The ultrafiltration according to step c) of the method is effected as mentioned through a membrane with a cut-off value not exceeding 20,000 Dalton, thereby separating the peptides formed by the hydrolysis of the casein-free whey protein materials from the non-hydrolyzed or insufficiently hydrolyzed whey proteins deposited on the membrane. The proteinases used during the hydrolysis of the casein-free whey protein material are also retained by said ultrafiltration.

According to the method of the invention arbitrarily available membranes may be used as membranes of ultrafiltration, provided they have the determined cut-off value. It is preferred to make use of membranes generally available on the market and made from highly resistant, synthetic polymers and which may be cleaned on the spot, e.g. with acid or base. Such ultrafiltration membranes are interalia marketed by DDS-RO-Division, Denmark, Rhône-Poulenc, France, Romicon, France, and Alfa-Laval, Sweden. GR61 PP-membranes from DDS-RO-Division may for instance be used as membranes with a cut-off value of 20,000.

It is particularly preferred to make use of an ultrafiltrating membrane with a cut-off value of about 6,000.

The filtrate achieved by the ultrafiltration may subsequently, if desired, be concentrated and/or dried in order to obtain the peptide product according to the invention.

The peptide product prepared by the method according to the invention is non-bitter in a solution of 3% by weight in water, has a neutral flavour and presents full solubility at pH 4 to 5 after being heated to 100°C for 10 minutes. The peptide products according to the invention have a maximum content of peptides with less than 6 amino acids of 15%. Due to their low content of free amino acids and small peptides they have, moreover, a low osmolarity.

Owing to their properties the peptide products are fitted for use in dietetics and generally applicable as amino acid sources or as protein substitutes in nutrients and refreshments, as for instance easily metabolizable protein supplements for athletes, in sausages, pies, ice cream, chocolate and carbonated beverages, such as beer and fizzwater.

A particular interest is attached to the peptide products prepared by the method according to the invention by subjecting them to ultrafiltration through a membrane having a cut-offvalue of 6,000 in step c). Said peptide products may be used as protein substitutes in nutrients and refreshments for persons allergic to cow's milk. Said peptide products show no antibody-bonding by immun-electrophoresis or by ELISA (enzyme linked immunosorbent assay) by using commercially available antibodies against bovine whey proteins or against bovine caseins (Pharmacia, Sweden, and Dako patts, Denmark). Likewise, they do not provoke passive, cutaneous anaphylactic reactions in mice, sensitized by murine antibodies against bovine whey proteins or caseins. Likewise, they do not provoke allergenic reactions by provocation-elimination tests in children suffering from clinical, well-proven allergy to cow's milk.

The method according to the invention is illustrated in detail by the following examples.

### Example 1

Preparing peptide products from fresh cheese whey by hydrolysis with Bacillus licheniformis proteinase (Alcalase 2,4 L, Novo Industri A/S, Denmark).

20. g CaC12. 2H₂0 was added to 200 liters of fresh cheese whey, and the cheese whey was adjusted to pH 4.6 with 2N HCI. The cheese whey was then left under stirring for 60 minutes at 40°C and for further 60 minutes at40°C without stirring. By this treatment the casein precipitated, and the dear whey which was carefully drawn off was further clarified by filtration through a sterile cloth. The whey thus obtained was, practically, free of casein and had a protein content of 0,52%, while the cheese whey prior to the isoelectrical precipitation of casein had a protein content of 0,79% by weight measured according to the Kjeldahl-method. The casein-free whey was subsequently concentrated and made free of lactose by ultrafiltration and dialfiltration on GR61 PP-membranes by use of a LAB 20 ultrafiltration module from DDS-RO Division, Denmark. The obtained whey protein concentrates free of casein and lactose (15 liters having a protein content of 5% by weight) was heated to 50°C and adjusted to pH 7.5 with 4.0 N NaOH. The hydrolysis was then started by adding Alcalase 2.4 L (5.0 ml); and the hydrolysis was continued until attaining a degree of hydrolysis of 12%, measured according to the pH-stat-method, keeping the pH-value constant at 7.5 by continuous titration with 4.0 N NaOH. The obtained peptides were separated from nonhydrolyzed whey proteins and proteinases by ultrafiltration on GR61 PP-membranes allowing the pept ides to pass. The peptide containing permeate thus obtained from the ultrafiltration was concentrated by freeze drying and resuspension in deionized water. The yield of peptides in the peptide product was 72% of the protein content of the whey protein concentrate. A 10% solution of the peptide product proved to be completely soluble at pH 4.0 to 5.0, even when heated to 100°C for 10 minutes. A 3% solution of the peptide product had a neutral taste. Column-chromatographic examinations of the molecular weight distribution of the peptides in the peptide product by gel filtration on Biogel P-6 (Biorad-Labs, France) discovered that about 17% by weight of the peptides had a molecular weight exceeding 6000, 15% by weight of the peptides had a molecular weight ranging between 4000 and 6000, 59% by weight of the peptides had a molecular weight ranging between 1000 and 4000 and 9% by weight of the peptides had a molecular weight below 1000.

### Example 2

Preparing peptide products from fresh cheese whey by hydrolysis with pancreaproteinases (Corolase PP, Rhom Chemie, Federal Republic of Germany).

A casein-free and lactose-free whey protein concentrate (15 with a protein content of 5% by weight) was prepared from fresh cheese whey as specified in Example 1.

The whey protein concentrate free of casein and of lactose was subjected to hydrolysis at 50°C and at pH 8.0 by adding 3.0 g of Corolase PP, and the hydrolysis was continued until attaining a hydrolysis degree of about 10%. A peptide containing permeate was prepared by ultrafiltration on GR61PP-membranes, and a freeze dried peptide product was obtained as set out in Example 1.

The yield of peptides in the peptide product was 49% of the protein amount of the whey protein concentrate. The peptide product was stable at pH 4.5 and at 100°C for 10 minutes and presented in a 3% solution a neutral flavour.

### Example 3

Preparing peptide products from fresh cheese whey by hydrolysis with porcine trypsin (Novo Industri A/S, Denmark).

A casein-free and lactose-free whey protein concentrate was prepared as outlined in Example 1 and subjected to hydrolysis as specified in Example 2. The yield of peptides in the peptide product obtained by ultrafiltration on GR61 PP-membranes was 42% of the protein content of the whey protein concentrate. A 10% solution of the peptide product was stable at pH 4.5, even after being heated to 100°C for 10 minutes. The peptide product presented in a 3% solution of deionised water a neutral flavour.

### Example 4

Preparing peptide products from fresh cheese whey by hydrolysis with Aspergillus oryzae proteinase (Rhozyme P41, Genencor, U.S.A.).

A casein-free and lactose-free whey protein concentrate (15 with a protein content of 5% by weight) was prepared as specified in Example 1 and subjected to hydrolysis at 50°C and at pH 7.5 by the addition of 15 g Rhozome P41. The hydrolysis was continued until obtaining a hydrolysis degree of about 8%. A peptide product was obtained as permeate by ultrafiltration on GR61 PP-membranes, and the yield of peptides in the peptide product was 39% of the protein content of the whey protein concentrate. The peptide product was stable in an acid medium as the products prepared by Examples 1 to 3 and presented an acceptable, neutral taste.

Column-chromatographic examinations of the molecular weight distribution of the peptides on Biogel P-6 discovered that the major portion of the peptides (60%) had a molecular weight ranging between 1500 and 2500, while less than 10% had a molecular weight higher than 6000 and lower than 1000, respectively.

### Example 5

Preparing 100 kg peptide product from fresh cheese whey by hydrolysis with Alcalase 2.4 L and ultrafiltration on GR61 PP-membranes.

Alcalase 2.4 Lwas used because this proteinase according to Examples 1 to4 proved to give the maximum yield.

4500 g CaCI2. 2H20 was added to 45,000 liters of fresh cheese whey, and the cheese whey was adjusted to pH 4.6 with concentrated HCI. When left for 5 hours the casein precipitated at 40°C, following which it was eliminated by centrifugation on a Westfalia separator (6500 rpm). Aquantity of 35,000 liters of clearwhey (protein content 0.56% by weight) was collected, concentrated and made free of lactose by ultrafiltration and diafiltration on GR61 PP-membranes. The whey protein concentrate free of casein and lactose was collected and the protein content was adjusted to 5% by weight. An amount of 3000 liters of whey protein concentrate (pH 7.5) was then subjected to hydrolysis at 50°C with 1.0 liter of Alcalase 2.4 L until attaining a degree of hydrolysis of 12%.

In this Example the pH-value was kept constant at 7.5 by continuous titration with a mixture of Ca(OH)₂, Mg(OH)₂, KOH and NaOH which was equivalent to 4.0 N NaOH as far as base strength is concerned. Said base mixture was used in order to limit the addition of sodium and at the same time to add a content of calcium, magnesium and potassium to the peptide preparation. Afterfinished hydrolysis the hydrolyzate was subjected to ultrafiltration on GR61 PP-membranes, and the peptide containing permeate was evaporated under vacuum and freeze dried. The peptide product thus obtained was closely equivalent to the product obtained according to Example 1. Due to the vast dead volume of the production plant in this example, the yield of peptides in the peptide product only was 57% of the protein amount of the whey protein concentrate.

### Example 6

Preparing peptide products from fresh cheese whey for use in nutrients for persons allergic to cow's milk.

A casein-free and lactose-free whey protein concentrate was prepared from cheese whey as outlined in Example 1 and subjected to hydrolysis with Alcalase 2.4 L as specified in Example 1, with Corolase PP as in Example 2, or with Rhozyme P41 as set out in Example 4. Contrary to Examples 1 to 4, the peptides obtained in this Example were separated from non-hydrolyzed whey protein and proteinases by ultrafiltration on membranes having a cut-off value of 6000 (GR81 PP-membranes, DDS-RO Division, Denmark). None of the obtained peptide products presented antibody-binding at immunoelectrophoresis or ELISA, and non of the peptide products was able to provoke Passive Cutane Anaphylaxis reactions in sensitized mice. Table I shows the yield of peptides, % by weight of the amount of proteins of the cheese whey and the molecular weight proportion of peptides of said three peptide products.

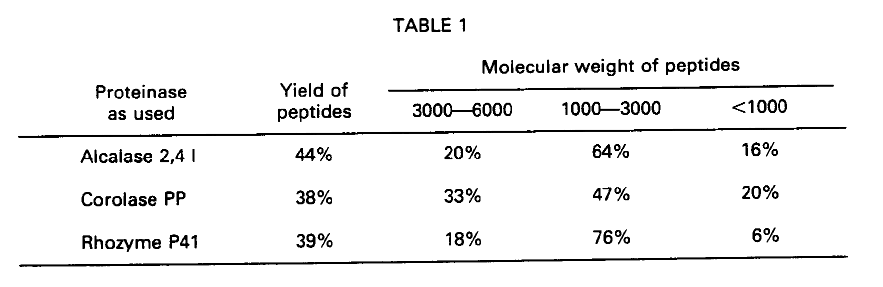

As it appears from Table 1 the yield of peptides of the three peptide products was low in comparison with the yield in Example 1 to 4. The low yield was due to the fact that the GR81 PP-membranes are impermeable to peptides having a molecular weight exceeding 6000 and have a slight permeability to peptides having a molecular weight exceeding about 4000.

### Example 7

Preparing peptide products from fresh cheese whey for use in food products for persons allergic to cow's milk by making use of combinations of different proteinases.

A casein-free and lactose-free whey protein concentrate was prepared as outlined in Example 1. The whey concentrate was subjected to hydrolysis with combinations of Alcalase 2.4 L, Corolase PP and Rhozyme P41, each individual hydrolysis being carried out with two of said proteinases simultaneously. Each hydrolysis was continued until the process had practically completed corresponding to a degree of hydrolysis ranging between 12 and 17% in dependence on the used combination of proteinases. The peptide products were obtained by ultrafiltration on GR81 PP-membranes as outlined in Example 6. The combination of Alcalase 2.4 L (6.5 ml/kg of whey protein) and Rhozyme P41 (20 g/kg of whey protein) proved to give a particularly appropriate peptide product, both with respect to the obtained high yield of peptides in the peptide product (74% by weight) and with respect to the advantageous molecular weight distribution of peptides in the peptide preparation, in which the major portion of the peptides (about 70%) had a molecular weight ranging between 1500 and 3000, and less than 15% had a molecular weight below 1000.

### Example 8

Preparing 135 kg peptide product from fresh cheese whey hydrolyzed with a mixture of Alcalase 2.4 Land Rhozyme P41 for use in neutrients for persons allergic to cow's milk.

Alcalase 2.4 L and Rhozyme P41 were preferred because this combination according to Example 7 resulted in the most appropriate peptide product.

4000 liters of a casein-free and lactose-free whey protein concentrate with a protein content of 5% by weight was prepared as specified in Example 5. The whey protein concentrate was heated to 50°C and adjusted to pH 7.5 with a base mixture consisting of Mg(OH)₂, Ca(OH)₂, KOH and NaOH. The hydrolysis was started by the addition of 1300 ml of Alcalase 2.4 L and 4.0 kg of Rhozyme P41 slurried in 20 liters of water. The pH-value was kept constant by means of a base mixture as outlined in Example 5, and the hydrolysis was continued until attaining a degree of hydrolysis of 16 to 17%. The peptides were subsequently separated from non-hydrolyzed whey protein and proteinases by ultrafiltration on GR81 PP-membranes (membrane area 35 m²). The yield of peptides in the peptide amounted to about 60% of the protein content of the whey protein concentrate and the peptide product was equal to the corresponding product prepared according to Example 7. The obtained peptide product was for a 2-month period of experiment given as daily peptide supplement (10 g the day) to 10 children atthe age of 0 to 7 years with a clinically, well proven allergy to cow's milk and the children concerned showed no sign of allergic reactions.

### Example 9

Preparing peptide products from commerical whey protein concentrate.

Whey protein concentrates produced from cheese whey according to a method consisting of ultrafiltration and diafiltration, strong heat treatment, vacuum evaporation and spray drying are commercially available from various companies. The whey protein concentrate applied in this case (Lacprodan-80 from Denmark Protein A/S, Denmark) showed a protein content of about 80%, of which about 30 to 40% by weight was casein, and a lactose content of 10 to 12%. The whey proteins are denaturated and therefore insoluble when mixing the powder in water. On the contrary, a stable slurry is obtained. By the hydrolysis of Lacprodan-80 with Alcalase 2.4 L (the degree of hydrolysis=12%) in a control experiment a peptide product with an extremely bitter flavour was obtained.

The casein contained in Lacprodan-80 was eliminated by hydrolysis with Bacillus subtilis proteinase (Neutrase, Novo Industri A/S, Denmark):

Aquantity of 10 liters of a suspension of Lacprodan-80 having a protein content of 5% was heated to 50°C and adjusted to a pH-value of 7.5 with 4.0 NaOH. The hydrolysis of the casein was started by the addition of 10 ml of Neutrase. The pH-value was kept constant by continuous titration with 4.0 N NaOH, and the hydrolysis was continued until the process was completed corresponding to a degree of hydrolysis of about 4% of all peptide bondings of the protein in Lacprodan-80. The casein cleavage products and lactose were then eliminated by ultrafiltration and diafiltration on GR81 PP-membranes. The yield of the peptides of the permeate was 28% which agreed well with the casein content in Lacprodan-80. The proteins retained in the retentate now constituted the casein-free and lactose-free whey protein concentrate in which denatured whey proteins were still occurring as an aqueous slurry. Retentates produced according to this method were subsequently subjected to hydrolysis either solely with Alcalase 2.4 L as outlined in Example 1 orwith Alcalase 2.4 Ltogether with Rhozyme P41 as specified in Example 7. The hydrolyzates were then ultrafiltrated on GR61PP-membranes (as in Example 1) or on GR81 PP-membranes (as in Example 7). The peptide products thus prepared were, as regards lack in bitterness, yield of peptides and molecular weight distribution, substantially similar to the peptide products produced from fresh cheese whey according to Example 1 and Example 7. The peptide products according to Example 9, however, had a faint, burnt taste possibly caused by the heat treatment of Lacprodan-80 in connection with the preparation of said product.

### Example 10

### Preparing peptide products from Lactalbumin

Lactalbumin consisting of caseins and heat-denaturated whey proteins was prepared from 100 liters of fresh cheese whey according to the following method which corresponds in principle to industrial preparation of lactalbumin:
Cheese whey was adjusted to pH 4.6 with 2 N HCI and heated to 90°C for 30 minutes. A slurry of casein and heat-denaturated whey protein, constituting together lactalbumin, was collected by centrifugation and resuspended in water so that its protein content attained 5%. By a control experiment a sample of lactalbumin was subjected to hydrolysis with Alcalase 2.4L, thereby providing a peptide product having an extremely bitter taste. The caseins contained in lactalbumin thus prepared was subjected to hydrolysis with Neutrase as set out in Example 9. The ultrafiltration carried out after the Neutrase-hydrolysis resulted in a permeate with a yield of peptides of about 32% of the total protein amount of lactalbumin.

The casein-free and lactose-free lactalbumin thus prepared was subjected to hydrolysis either solely with Alcalase 2.4L or with Alcalase 2.4 L together with Rhozyme P41 and the peptide products were obtained as outlined in Example 9. The obtained peptide products free of bitter taste corresponded closely with the peptide products obtained according to Example 9.

## Claims

1. A method of preparing a heat resistant, non-bitter, easily water-soluble peptide product from a whey protein material containing casein, comprising the following steps:
a) hydrolyzing the whey protein material with at least one proteinase,
b) ultrafiltrating the hydrolysate obtained by a) through a membrane having a cut-off value not exceeding 20,000 Dalton, then collecting the filtrate,
and subsequently, if desired, concentrating and/or drying the filtrate,
characterized in
that casein is eliminated from the whey protein material containing casein before step a); and
that the casein-free whey protein is hydrolyzed to a degree of hydrolysis ranging between 8 and 18%.

2. A method as claimed in claim 1, characterized in that the casein is eliminated from non-heat-treated whey before step a) by separating the casein particles on a filter with such size of pores that the casein particles are retained while the whey proteins pass the filter, preferably a pore size of about 0.2 f,.lm.

3. A method as claimed in claim 1, characterized in that the casein is eliminated from non-heat-treated whey before step a) by adjusting the pH-value at 4.5 to 5.0 by the addition of acid and by simultaneous addition of CaC1₂ in an amount ranging between 1 and 25 g/100 liters, leaving the mixture for at least one hour at 30 to 50°C and separating the caseins thus precipitated.

4. A method as claimed in claim 1, characterized in that the casein is eliminated from the whey protein material before step a) by hydrolyzing the casein with the neutral metalloproteinase from Bacillus subtilis, preferably until attaining a degree of hydrolysis of about 4%, based on the total protein amount and by separating the casein cleavage products.

5. A method as claimed in claim 4, characterized in that the hydrolysis of the casein is effected at a pH-value ranging between 4 and 9 and at a temperature between 30°C and 60°C.

6. A method as claimed in claim 4, characterized in that lactalbumin is used as whey protein material and that prior to the hydrolysis in step a) the casein decomposing products are separated by centrifugation.

7. Amethod as claimed in claim 4, characterized in that prior to the hydrolysis in step a) the casein cleavage products are separated by ultrafiltration on a membrane having a cut-off value not exceeding about 20,000 Dalton.

8. Amethod as claimed in any of claims 1 to 7, characterized by concentrating the casein-free whey protein material obtained before step a) and/or separating lactose, preferably by diafiltration on an ultrafiltration membrane having a cut-off value of about 20,000 or less, before subjecting it to hydrolysis.

9. A method as claimed in any of claims 1 to 8, characterized by using as proteinase Porcine pancreas proteinase, Aspergillus oryzae proteinase, Streptomyces griseus proteinase, Bacillus licheniformis proteinase or trypsin.

10. A method as claimed in any of the preceding claims, characterized in that the ultrafiltration in step b) is carried out by means of a membrane with a cut-off value of about 6000 Dalton.

11. A heat-resistant, non-bitter, neutrally tasting peptide product, characterized in that it is obtainable by the method according to any of claims 1 to 10, and that it has a content of peptides including less than 6 amino acid residues not exceeding 15% by weight.

## Patentansprüche

1. Verfahren zur Herstellung eines hitzebeständigen. nicht bitteren, leicht wasserlöslichen Peptidproduktes aus einem caseinhaltigen Molkeproteinmaterial, umfassend die folgenden Stufen:
a) Hydrolysieren des Molkeproteinmaterials mit zumindest einer Proteinase,
b) Ultrafiltrieren des in a) erhaltenen Hydrolysats durch eine Membran mit einem Cut-off-Wert von höchstens 20000 Dalton, danach Aufsammeln des Filtrats
und, falls erwünscht, darauffolgendes Konzentrieren und/oder Trocknen des Hydrats,
dadurch gekennzeichnet, daß das Casein aus dem caseinhaltigen Molkeproteinmaterial vor der Stufe a) beseitigt wird; und
daß das caseinfreie Molkeprotein bis zu einem Hydrolysegrad im Bereich zwischen 8 und 18 % hydrolysiert wird.

2. Verfahren nach Anspruch 1, dadurch gekennzeichnet, daß man das Casein von nicht wärmebehandelter Molke vor der Stufe a) entfernt durch Abfiltrieren der Caseinpartikel auf einem Filter mit einer solchen Porengröße, daß die Caseinpartikel zurückgehalten werden, während die Molkeproteine das Filter passieren, vorzugsweise einer Porengröße von etwa 0,2 µm.

3. Verfahren nach Anspruch 1, dadurch gekennzeichnet, daß man das Casein von nicht wärmebehandelter Molke vor der Stufe a) entfernt durch Einstellen des pH-Wertes auf 4,5 bis 5,0 durch Zusatz von Säure und gleichzeitiges Beimischen von CaC1₂ in einer Menge im Bereich zwischen 1 und 25 g/ 100 Liter, Stehenlassen des Gemisches während zumindest einer Stunde bei 30 bis 50°C und Abscheidung der dabei ausgefällten Caseine.

4. Verfahren nach Anspruch 1, dadurch gekennzeichnet, daß man das Casein von dem Molkeproteinmaterial vor der Stufe a) entfernt durch Hydrolysieren des Caseins mit der neutralen Metallproteinase von Bacillus subtilis. vorzugsweise bis zu einem Hydrolysegrad von etwa 4%, gemessen an der Gesamtproteinmenge. und Separieren der gebildeten Casein-Spaltprodukte.

5. Verfahren nach Anspruch 4, dadurch gekennzeichnet, daß die Hydrolyse des Caseins bei einem pH-Wert im Bereich zwischen 4 und 9 und bei einer Temperatur zwischen 30°C und 60°C durchgeführt wird.

6. Verfahren nach Anspruch 4, dadurch gekennzeichnet, daß man als Molkeproteinmaterial Lactalbumin verwendet, und daß man vor der Hydrolyse in Stufe a) die Caseinzersetzungsprodukte durch Zentrifugierung abscheidet,

7. Verfahren nach Anspruch 4, dadurch gekennzeichnet, daß man vor der Hydrolyse in Stufe a) die Casein-Spaltprodukte durch Ultrafiltrierung auf einer Membran mit einem Cut-off-Wert von höchstens etwa 20000 Dalton abtrennt.

8. Verfahren nach mindestens einem der Ansprüche 1 bis 7, dadurch gekennzeichnet, daß man das vor der Stufe a) erhaltene caseinfreie Molkeproteinmaterial konzentriert und/oder Lactose abtrennt, vorzugsweise durch Diafiltrierung auf einer Ultrafiltriermembran mit einem Cut-off-Wert von etwa 20000 oder weniger, bevor es einer Hydrolyse unterzogen wird.

9. Verfahren nach mindestens einem der Ansprüche 1 bis 8, dadurch gekennzeichnet, daß man als Proteinase Porcine pancreas Proteinase, Aspergillus oryzae Proteinase, Streptomyces griseus Proteinase, Bacillus licheniformis Proteinase oder Trypsin verwendet.

10. Verfahren nach mindestens einem der vorangehenden Ansprüche, dadurch gekennzeichnet, daß die Ultrafiltrierung in Stufe b) mittels einer Membran mit einem Cut-off-Wert von etwa 6000 Dalton durchgeführt wird.

11. Hitzebeständiges, nicht bitteres, neutral schmeckendes Peptidprodukt, dadurch gekennzeichnet, daß es durch das Verfahren nach mindestens einem der Ansprüche 1 bis 10 erhältlich ist und daß es einen Gehalt an Peptiden von weniger als 6 Aminosäureresten von höchstens 15 Gew.-% aufweist.

## Revendications

1. Procédé pour préparer un produit à base de peptides, résistant à la chaleur, non amer, hydrosoluble, à partir d'un produit à base de protéine de petit-lait contenant de la caséine, caractérisé par les étapes suivantes :
a) d'hydrolyse du produit à base de protéine de petit-lait, avec au moins une protéinase,
b) d'ultrafiltration de l'hydrolysat obtenu selon a) à travers une membrane ayant un niveau de coupure n'excédant pas 20000 Daltons, le filtrat étant alors recueilli,
et ensuite, si on le désire, de concentration et/ou de séchage du filtrat, caractérisé en ce que la protéine caséine est éliminée du produit à base de protéine de petit-lait contenant de la caséine avant l'étape a) ; et que la protéine de petit-lait dépourvue de caséine est hydrolysée jusqu'à un taux d'hydrolyse entre 8 et 18 %

2. Procédé selon la revendication 1, caractérisé en ce que la caséine est éliminée du petit-lait non traité thermiquement avant l'étape a) par séparation des particules de caséine sur un filtre dont la taille des pores est telle que les particules de caséine sont retenues et que les protéines de petit-lait passent à travers le filtre, de préférence une taille de pores d'environ 0,2 f,.lm.

3. Procédé selon la revendication 1, caractérisé en ce que la caséine est éliminée du petit-lait non traité thermiquement, avant l'étape a), en ajustant la valeur du pH de 4,5 à 5,0 par addition d'acide et par addition simultanée de CaC1₂ en une quantité allant de 1 à 25g/100 litres, en laissant le mélange pendant au moins 1 heure à une température de 30 à 50°C, et en séparant les caséines ainsi précipitées.

4. Procédé selon la revendication 1, caractérisé en ce que la caséine est éliminée du produit à base de protéine de petit-lait avant l'étape a) par hydrolyse de la caséine avec de la métalloprotéinase neutre de Bacillus subtilis, de préférence jusqu'à obtention d'un taux d'hydrolyse d'environ 4 %, calculé sur la quantité totale de protéine, et séparation des produits de clivage de la caséine.

5. Procédé selon la revendication 4, caractérisé en ce que l'hydrolyse de la caséine est effectuée à une valeur de pH entre 4 et 9 et à une température entre 30 et 60°C.

6. Procédé selon la revendication 4, caractérisé en ce que, comme produit à base de protéine de petit-lait, on utilise de la lactalbumine, et en ce qu'avant l'hydrolyse de l'étape a), on sépare les produits de décomposition de la caséine par centrifugation.

7. Procédé selon la revendication 4, caractérisé en ce qu'avant l'hydrolyse de l'étape a), on sépare les produits de clivage de la caséine par ultrafiltration à travers une membrane présentant un niveau de coupure n'excédant pas environ 20000 Daltons.

8. Procédé selon l'une quelconque des revendications 1 à 7, caractérisé en ce que l'on concentre le produit à base de protéine de petit-lait dépourvu de caséine obtenu avant l'étape a) et/ou que l'on sépare le lactose, de préférence par dialfiltration à travers une membrane d'ultrafiltration ayant un niveau de coupure d'environ 20000 Daltons ou moins, avant de le soumettre à hydrolyse.

9. Procédé selon l'une quelconque des revendications 1 à 8, caractérisé en ce que, comme protéinase, on utilise la pancréaprotéinase Porcine, la protéinase d'Aspergillus oryzae, la protéinase de Streptomyces griseus, la protéinase de Bacillus licheniformis ou la trypsine.

10. Procédé selon l'une quelconque des revendications précédentes, caractérisé en ce que l'ultrafiltration de l'étape b) est effectuée à l'aide d'une membrane ayant un niveau de coupure d'environ 6000 Daltons.

11. Produit à base de peptides, résistant à la chaleur, non amer, de goût neutre, caractérisé en ce qu'il est obtenu par le procédé selon l'une quelconque des revendications 1 à 10, et qu'il a une teneur en peptides comprenant moins de 6 résidus amino-acides n'excédant pas 15 % en poids.
